# EUROPÄISCHE PATENTSCHRIFT

(11) **EP 2 456 645 B1**
(45) Veröffentlichungstag und Bekanntmachung des Hinweises auf die Patenterteilung: **05.03.2014**
(21) Anmeldenummer: 10735233.8
(22) Anmeldetag: 07.07.2010
(51) Int. Cl.: B60T 8/52, F16D 65/14

(54) **ABSTÜTZZYLINDER FÜR EINE SELBSTVERSTÄRKENDE HYDRAULISCHE BREMSE**
SUPPORT CYLINDER FOR A SELF-REINFORCING HYDRAULIC BRAKE
CYLINDRE D'APPUI POUR UN FREIN HYDRAULIQUE AVEC AUTO-AMPLIFICATION

(30) Priorität: 21.07.2009 DE 102009034522
(43) Veröffentlichungstag der Anmeldung: 30.05.2012
(73) Patentinhaber: Siemens Aktiengesellschaft, 80333 München (DE)
(72) Erfinder: EWALD, Julian, 32805 Horn-Bad Meinberg (DE); STAMMEN, Christian, 41564 Kaarst (DE); LIERMANN, Matthias, 1107 2020 Beirut (LB)
(86) Internationale Anmeldenummer: PCT/EP2010/059721
(87) Internationale Veröffentlichungsnummer: WO 2011/009722

(56) Entgegenhaltungen:
- EP-A1- 0 566 133
- WO-A1-2008/031701

## Beschreibung

Die Erfindung betrifft eine Druckerzeugungsvorrichtung zum Erzeugen eines Hydraulikdruckes in Folge einer Zug- oder Druckbeanspruchung mit Anschlüssen, von denen einer mit einer Mechanik zum Einleiten einer mechanischen Zug- oder Druckbeanspruchung und ein anderer Anschluss starr mit einem Gestell verbindbar ist, einem Druckzylinder und einer Kolbeneinheit, die sich zumindest teilweise und beweglich in dem Druckzylinder erstreckt und gemeinsam mit dem Druckzylinder eine mit Hydraulikflüssigkeit befüllte Hydraulikkammer begrenzt.

Die Erfindung betrifft ferner eine Bremsvorrichtung zum Bremsen einer bewegten Masse mit einem beweglich geführten Kopplungsglied zum Andrücken eines Bremsbelages an eine Bremsfläche und einem mit einer Hydraulikflüssigkeit befüllten und mit dem Kopplungsglied verbundenen Bremsaktor zum Erzeugen einer Andruckkraft, die über das Kopplungsglied in den Bremsbelag einleitbar ist, wobei der Bremsbelag über eine Mechanik mit einer Druckerzeugungsvorrichtung verbunden ist, die an einem Gestell der zu bremsenden Masse befestigbar ist, wobei die Druckerzeugungsvorrichtung beim Bremsen in einer mit dem Bremsaktor über Hydraulikleitungen verbundenen Hydraulikkammer einen hydraulischen Druck erzeugt.

Eine solche gattungsgemäße Druckerzeugungsvorrichtung und eine solche Bremsvorrichtung sind aus der WO 2008/031701 A1 bereits bekannt. Dort ist eine selbstverstärkende hydraulische Bremsevorrichtung offenbart, die über einen Bremsaktor zum Erzeugen einer Andruckkraft verfügt. Die vom Bremsaktor erzeugte hydraulische Druckkraft wird über ein mechanisches Kopplungsglied in Bremsbeläge eingeleitet, die unter Reibschluss gegen eine sich drehende Bremsscheibe gepresst werden. Der Bremsbelag stützt sich nicht wie bei üblichen Bremsen an einem Gestell, beispielsweise dem Rahmen eines Zuges oder eines Kraftfahrzeuges ab. Vielmehr stützen sich die Bremsbeläge über eine zweckmäßige Hebelmechanik auf einer Säule von Hydraulikflüssigkeit ab. Diese Hydraulikflüssigkeit ist in einer Hydraulikkammer einer Druckerzeugungsvorrichtung angeordnet, wobei die Druckerzeugungsvorrichtung als Gleichgangszylinder ausgebildet ist. Dieser umfasst einen Druckzylinder, der durch einen Kolben in zwei Druckkammern unterteilt ist, wobei die eine Druckkammer bei Druckbeanspruchung und die andere Druckkammer bei Zugbeanspruchung mit Druck beaufschlagt wird. Die besagten Hydraulikkammern sind über Hydraulikleitungen so mit dem Bremsaktor verbunden, dass die Hydraulikkammer, die den höheren Druck aufweist; mit dem Bremsaktor verbunden ist, so dass der in der Hydraulikkammer erzeugte Druck zu einer Verstärkung des Hydraulikdruckes im Bremsaktor führt. Auf diese Weise ist eine Selbstverstärkung bereitgestellt. Die Selbstverstärkung ist über Regelmittel regelbar. Der bekannten Bremsvorrichtung haftet der Nachteil an, dass die Druckerzeugungsvorrichtung als Gleichgangzylinder ausgestaltet ist, so dass ein hydraulischer Gleichrichter sowie ein Ventil für die Rückstellung des Gleichgangzylinders in seine Ausgangslage erforderlich sind. Eine hydraulische Gleichrichtung ist jedoch aufwändig und kostenintensiv.

Neben dem Einsatz eines doppelt wirkenden Hydraulikzylinders ist auch der Einsatz von zwei einfach wirkenden Hydraulikzylindern, beispielsweise zwei Plungerzylindern, als Druckerzeugungsvorrichtung bei einer selbstverstärkenden hydraulischen Bremse bekannt, wobei der eine Plungerzylinder bei einer Druckbeanspruchung und der andere Plungerzylinder bei einer Zugbeanspruchung mit Druck beaufschlagt wird. Die Hydraulikkammern der Plungerzylinder sind wieder mit dem Bremsaktor verbunden, so dass auch hier eine Selbstverstärkung erreicht wird. Der Einsatz zweier Plungerzylinder ist durch die notwendige hydraulische Verschaltung aufwändig und kostenintensiv.

Aus der Druckschrift EP 0 566 133 A1 ist eine weitere gattungsgemäße Druckerzeugungsvorrichtung bekannt, bei der die Anschlüsse über Ankopplungsmittel mit dem Druckzylinder oder der Kolbeneinheit verbunden sind, wobei die Ankopplungsmittel so ausgestaltet sind, dass bei einer Zugbeanspruchung und bei einer Druckbeanspruchung dieselbe Hydraulikkammer mit Druck beaufschlagt wird.

Die Erfindung zielt ebenfalls darauf ab, Zug- und Druckkräfte so in die Druckerzeugungsvorrichtung einzuleiten, dass der Druckaufbau in ein- und derselben hydraulischen Kammer erfolgt. Die Hydraulikkammer ist über zweckmäßige und an einem Hydraulikausgang der Hydraulikkammer angebrachte Hydraulikleitungen mit dem Bremsaktor der hydraulischen Bremse verbunden, so dass eine selbstverstärkende hydraulische Bremse bereitgestellt ist. Um die beim Bremsen entstehenden Druck- und Zugkräfte in dieselbe Hydraulikkammer einleiten zu können, ist erfindungsgemäß der Einsatz von Anschlägen und Widerlagern vorgesehen, die miteinander wechselwirken, so dass die Kolbeneinheit unabhängig von der Richtung der eingeleiteten Kraft gegenüber dem Druckzylinder belastet ist, wobei sich die eingeleitete Kraft direkt auf der Hydraulikflüssigkeitssäule abstützt. Die Anschläge und Widerlager sind hier allgemein als Ankopplungsmittel bezeichnet. Die Ankoppelungsmittel stellen eine Wirkverbindung zwischen einem Anschluss und dem Druckzylinder und/oder der Kolbeneinheit her. Erfindungsgemäß ist die wirksame Kolbenfläche für beide Richtungen der in form einer Druck- oder Zugbeanspruchung eingeleiteten Verzögerungskraft gleich groß. Da nur eine Hydraulik erforderlich ist, ist ein kompakter Aufbau ermöglicht. Der Bremsaktor ist zweckmäßigerweise über eine Regeleinheit mit der Hydraulikkammer verbunden. Gemäß der Erfindung sind im Vergleich zu den Lösungen des Standes der Technik weniger Dichtstellen realisiert, mit geringeren Kosten und geringerem Gewicht im Gefolge. Gegenüber einer Lösung mit zwei Plungerzylindern ist erfindungsgemäß eine geringere hydraulische Kapazität bereitgestellt, wodurch weniger Hydraulikflüssigkeit benötigt wird. Die erfindungsgemäße Druckerzeugungsvorrichtung und somit die erfindungsgemäße Bremsvorrichtung sind weniger raumgreifend und benötigen gegenüber dem Stand der Technik einen geringeren Wartungsaufwand. Auch ist ein einfacher Austausch der erfindungsgemäßen Druckerzeugungsvorrichtung möglich, da die Druckerzeugungsvorrichtung an nur zwei Stellen, nämlich den Anschlüssen, mit der zu bremsenden Masse beziehungsweise dem Bremssattel verbunden wird. Es ist somit sowohl eine einfache Anbindung an die zu bremsenden Masse ermöglicht, als auch eine kompatible Anbindung zu konventionellen Bremsen.

Aufgabe der Erfindung ist es, eine Druckerzeugungsvorrichtung und eine Bremsvorrichtung der eingangs genannten Art bereitzustellen, die in ihrem Aufbau einfach und kostengünstig sind.

Die Erfindung löst diese Aufgabe dadurch, dass die Ankopplungsmittel hohle Hülseneinheiten auf, wobei jede Hülseneinheit Greifarme ausbildet, die bei einer Zugbeanspruchung in Eingriff mit an der Kolbeneinheit oder an dem Druckzylinder ausgebildeten Anschlagschultern geraten, so dass die Greifarme und die Anschlagschultern Zugkopplungsmittel ausbilden. Jede Hülseneinheit ist zweckmäßigerweise starr mit einem Anschluss verbunden. So ist beispielsweise jeder Anschluss an eine Hülseneinheit angeformt. Die hohle Ausgestaltung der Hülsenabschnitte ermöglicht einen Freilauf der Kolbeneinheit oder des Druckzylin-ders, in einer Richtung, so dass eine Relativbewegung jeder Hülseneinheit sowohl bezüglich der Kolbeneinheit als auch bezüglich des Druckzylinders ermöglicht ist. Die Hülseneinheit können somit sowohl als Zugkopplungsmittel als auch als Druckkopplungsmittel wirken, wozu diese zweckmäßige Widerlager und Greifarme ausbilden. Dabei wirken die Greifarme sowohl als Mitnehmer als auch als Widerlager oder Anschlag. Als Widerlager wirken die Greifarme beispielsweise bei einer Druckbeanspruchung. Mit anderen Worten umfassen die Druckkopplungsmittel in Sinne dieser Weiterbildung der Erfindung an den Hülseneinheiten ausgebildete Widerlager, an denen die Kolbeneinheit beziehungsweise der Druckzylinder anliegen. Die Zugkopplungsmittel umfassen an den Hülseneinheiten ausgebildete Greifarme, die in Eingriff mit den Anschlagsschultern gelangen, die an der Kolbeneinheit und/oder an dem Druckzylinder ausgebildet sind. Die Ankopplungsmittel umfassen selbstverständlich sowohl die Zugkopplungsmittel als auch die Druckkopplungsmittel.

Vorteilhafterweise liegen bei einer Druckbeanspruchung die Greifarme eines der Hülseneinheiten an dem Druckzylinder an, wobei die Kolbeneinheit an einem Druckwiderlager anliegt, so dass die besagten Greifarme und das Druckwiderlager die Druckkopplungsmittel ausbilden.

Zweckmäßigerweisen ist das Druckwiderlager die Innenwand einer anderen Hülseneinheit. Das Druckwiderlager ist mit anderen Worten nicht an der Hülseneinheit ausgebildet, dessen Greifarme an dem Druckzylinder anliegen.

Gemäß einer vorteilhaften Ausgestaltung der Erfindung ist der Druckzylinder als Zylinderrohr ausgestaltet, das zumindest teilweise in einer der hohlen Hülseneinheiten angeordnet ist und einen Flanschabschnitt als Anschlagschulter aufweist, der bei einer Zugbeanspruchung in Eingriff mit den Greifarmen der besagten Hülseneinheit gelangt.

Vorteilhafterweise weist die Kolbeneinheit einen in einem der Hülseneinheiten angeordneten Mitnehmer und eine in dem Druckzylinder angeordneten und die Hydraulikkammer begrenzenden Kolben auf, wobei der Kolben und der Mitnehmer über eine sich durch die Hydraulikkammer erstreckende Kolbenstange miteinander verbunden sind und der Mitnehmer die Greifarme der zugeordneten Hülseneinheit hintergreift. Mit dem Begriff "hintergreifen" ist hier ausgedrückt, dass der Mitnehmer quer zur Zugrichtung einen größeren Durchmesser aufweist, als der Innendurchmesser der Durchgangsöffnung der Hülseneinheit, durch welche sich die Kolbenstange erstreckt.

Zweckmäßigerweise ist in der Hydraulikkammer eine Druckfeder angeordnet, die an der Kolbeneinheit und an dem Druckzylinder abgestützt ist. Die Druckfeder überführt die bewegliche Kolbeneinheit beziehungsweise den beweglichen Druckzylinder in ihre relative Ausgangsstellung zurück. In der Ausgangsstellung gleicht der Druck in der Hydraulikkammer in etwa dem Atmosphärendruck.

Die Hydraulikkammer ist über eine Hydraulikausgleichsöffnung mit einem mit Hydraulikflüssigkeit befüllten Hydrauliktank verbunden. Auf diese Weise kann genügend Hydraulikflüssigkeit nachgesaugt werden, so dass bei einer Vergrößerung des Volumens der Hydraulikkammer diese mit ausreichend Hydraulikflüssigkeit befüllt ist.

Wie bereits ausgeführt wurde, kommuniziert die Hydraulikkammer mit dem Bremsaktor oder dem Bremszylinder einer hydraulischen Bremse, so dass eine Selbstverstärkung bereitgestellt ist.

Vorteilhafterweise sind Regelungsmittel zum Regeln einer Verzögerungskraft bereitgestellt, die als Zug- oder Druckbeanspruchung über die Mechanik in die Anschlussmittel der Druckerzeugungsvorrichtung einleitbar ist. Gemäß dieser vorteilhaften Weiterentwicklung kann die selbstverstärkende hydraulische Bremse mit der erfindungsgemäßen Druckerzeugungsvorrichtung beliebig geregelt werden, so dass einstellbare Bremsverzögerungen bereitgestellt werden. Um diese Selbstverstärkung regeln zu können, ist eine Regelungseinheit in Form zweckmäßiger Ventile bereitgestellt, über welche der Druckerzeugungsvorrichtung mit dem Bremsaktor verbunden ist. An dieser Stelle sei darauf hingewiesen, dass im Rahmen der Erfindung nicht etwa die Kraft geregelt wird, mit der die Bremsbeläge an die sich bewegende Bremsfläche angedrückt wird. Vielmehr kann im Rahmen der Erfindung direkt die Verzögerungskraft eingestellt werden. Die Verzögerungskraft ist die Kraft, mit der sich die Bremsbeläge auf der Hydraulikflüssigkeitssäule abstützen. Dies entspricht genau der Kraft, mit welcher die zu bremsende Masse verzögert wird.

Weitere zweckmäßige Ausgestaltungen und Vorteile der Erfindung sind Gegenstand der nachfolgenden Beschreibung von Ausführungsbeispielen der Erfindung unter Bezug auf die Figuren der Zeichnung, wobei gleiche Bezugszeichen auf gleich wirkende Bauteile verweisen und wobei
- Figur 1: ein erstes Ausführungsbeispiel der erfindungsgemäßen Druckerzeugungsvorrichtung in einer Ausgangsstellung ohne eingeleitete Kraft,
- Figur 2: die Druckerzeugungsvorrichtung nach Figur 1 bei einer Druckbeanspruchung,
- Figur 3: die Druckerzeugungsvorrichtung gemäß Figur 1 bei einer Zugbeanspruchung,
- Figur 4: die Druckerzeugungsvorrichtung gemäß Figur 1 bei Druckbeanspruchung, wobei die Druckkraft in den anderen Anschluss eingeleitet wird, und
- Figur 5: die Druckerzeugungsvorrichtung gemäß Figur 1 bei Zugbeanspruchung, wobei die Zugkraft in den andern Anschluss eingeleitet wird, zeigen.

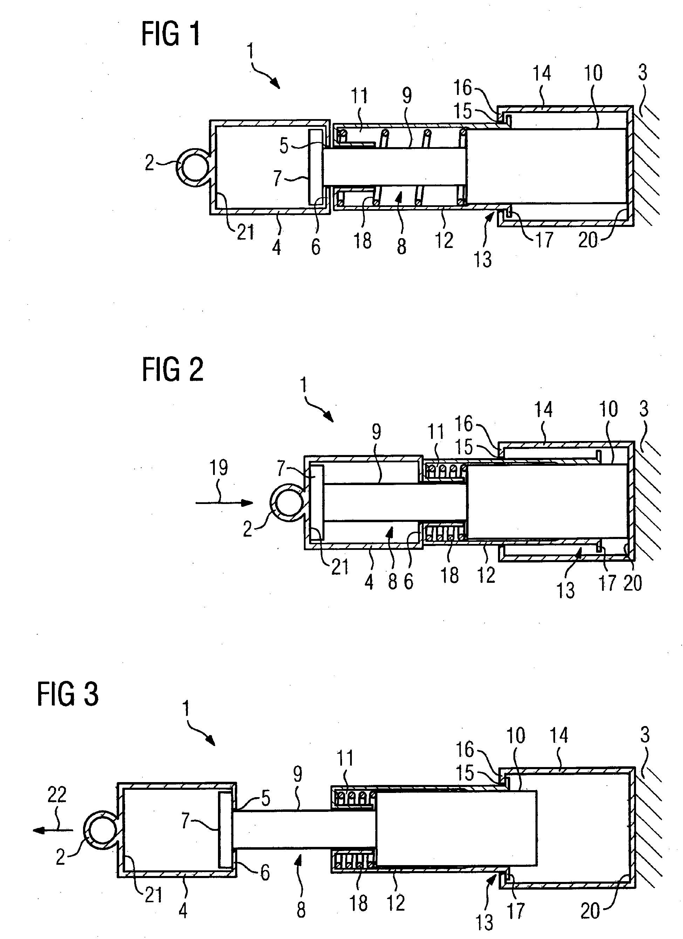

Figur 1 zeigt ein Ausführungsbeispiel der erfindungsgemäßen Druckerzeugungsvorrichtung 1 in einer Ausgangsstellung. In der Ausgangsstellung wird keine Kraft in einen der Anschlüsse eingeleitet. Der Druck in der Hydraulikkammer ist in etwa gleich dem Atmosphärendruck. Diese Stellung liegt im ungebremsten Zustand also bei gelöster Bremse vor. Der Druckerzeugungsvorrichtung 1 weist einen ersten Anschluss 2, der über eine figürlich nicht dargestellte Hebelmechanik mit dem Bremssattel einer Reibbremse verbunden ist. Der Bremssattel ist über zweckmäßige Kopplungsmittel mit einem Bremszylinder verbunden, in dem eine Bremshydraulikkammer bereitgestellt ist, die bei einem Bremsvorgang mit Druck beaufschlagt wird. Die Bremshydraulikkammer ist von einem beweglichen Bremskolben begrenzt. Der in der Bremshydraulikkammer erzeugte Druck sorgt für eine Verschiebung des Bremskolbens und somit für eine Bremsbewegung, die über die Kopplungsmittel in die Bremsbeläge des Bremssattels eingeleitet wird. Auf diese Weise werden die Bremsbeläge an die abzubremsende Masse, beispielsweise an die Bremsscheibe einer Lokomotive, angepresst. Durch die Drehbewegung der Bremsscheiben wird der Bremssattel unter Reibschluss mitgerissen. Mit anderen Worten wird die Verzögerungskraft in den Bremssattel eingeleitet, der nicht etwa an einem Gestell der abzubremsenden Masse, sondern vielmehr an der Druckerzeugungsvorrichtung 1 abgestützt ist.

Eine beim Bremsen auftretende Verzögerungskraft 19 wird als Druckbeanspruchung zunächst in den ersten Anschluss 2 eingeleitet. Darüber hinaus verfügt die Druckerzeugungsvorrichtung 1 über einen zweiten Anschluss 3, der starr mit dem Gestell der abzubremsenden Masse, beispielsweise an dem Gestell einer Lokomotive befestigt ist. Der zweite Anschluss 3 ist daher in Figur 1 durch ein Widerlager dargestellt.

Der erste Anschluss 2 ist mit einer Hülseneinheit 4 starr verbunden. Die Hülseneinheit 4 ist hohl ausgebildet und weist eine Durchgangsöffnung 5 auf, deren Begrenzungswand Greifarme 6 ausbildet, die bei einer Zugbeanspruchung in Eingriff mit einem Mitnehmer 7 gelangen. Der Mitnehmer 7 ist Teil einer Kolbeneinheit 8, die neben dem Mitnehmer 7 über eine Kolbenstange 9 sowie einen Kolben 10 verfügt. Dabei durchgreift die Kolbenstange 9 eine Hydraulikkammer 11, die mit einer Hydraulikflüssigkeit, wie einem Hydrauliköl, befüllt ist. Die Hydraulikkammer 11 ist von einem Druckzylinder, der als Zylinderrohr 12 ausgestaltet ist, sowie von dem Kolben 10 begrenzt.

Das Zylinderrohr 12 ragt mit seinem Zylinderende 13 in eine zweite hohle Hülseneinheit 14 hinein, die fest mit dem zweiten Anschluss 3 verbunden ist. Die Hülseneinheit 14 ist - aus Sicht der abzubremsenden Masse - ortsfest gehalten. Genauer betrachtet durchgreift das Zylinderrohr 12 mit seinem Zylinderende 13 eine Durchgangsöffnung 15 der Hülseneinheit 14, deren Begrenzungswandung wieder Greifarme 16 ausbilden. An dem Zylinderende 13 ist an dem Zylinderrohr 12 ein Flanschabschnitt 17 angeformt, der als Anschlagschulter wirkt, wobei durch die Greifarme 16 ein Zugwiderlager ausgebildet ist, das ein Herausziehen des Zylinderrohres 12 aus der Hülseneinheit 14 verhindert. Das am Zylinderende 13 offene Zylinderrohr 12 wird von dem Kolben 10 der Kolbeneinheit 8 dicht verschlossen, so dass ein Austritt von Hydraulikflüssigkeit vermieden ist. Die Durchgangsöffnung 15 der Hülseneinheit 14 wird von dem Flanschabschnitt 17 des Zylinderrohres 18 hinterschnitten, so dass die Längsbewegung des Zylinderrohres 12 begrenzt ist.

Die erste Hülseneinheit 4 ist so ausgebildet, dass diese an ihrer von dem Anschluss 2 abgewandten Seite die Durchgangsöffnung 5 aufweist, durch die sich für die Kolbenstange 9 erstreckt. Der an dem freien Ende der Kolbenstange 9 angeordnete Mitnehmer 7 hintergreift die Durchgangsöffnung 5, weist also quer zur Zugrichtung einen größeren Flächendurchmesser auf als die Durchgangsöffnung 5. Bei einer Zugbeanspruchung leiten die Greifarme 6 eine Zugbewegung in den Mitnehmer 7 ein. Bei einer Druckbeanspruchung drücken die Greifarme 6 hingegen gegen das Zylinderrohr 12 und wirken als Widerlager oder starre Verlängerung des ersten Anschlusses 2.

Figur 2 zeigt die Druckerzeugungsvorrichtung 1 gemäß Figur 1 unter Druckbeanspruchung, bei der eine Druckkraft 19 in Richtung des eingezeichneten Pfeils in den Anschluss 2 eingeleitet wird. Es ist erkennbar, dass die Hülseneinheit 4 mit den als starre Verlängerung des ersten Anschlusses 2 wirkenden Greifarmen 6 gegen das Zylinderrohr 12 drückt, so dass dieses mit ihrem Zylinderende 13 in die Hülseneinheit 14 hinein verschoben wird. Dabei wird der an der ortsfesten Innenwand 20 der Hülseneinheit 14 anliegende unbewegliche Kolben 10 in das Zylinderrohr 12 hinein gedrückt, wobei sich die Hydraulikkammer 11 verkleinert. Auf diese Weise wird die Hydraulikflüssigkeit der Hydraulikkammer 11 mit Druck beaufschlagt. Über die nicht gezeigte Hydraulikverbindung wird der Hydraulikdruck des figürlich nicht dargestellten Bremskators erhöht, so dass eine selbstverstärkende hydraulische Bremse bereitgestellt ist. Zur Regelung der Selbstverstärkung sind in der Hydraulikleitung Regelventile vorgesehen. Nur der Vollständigkeit halber sei angemerkt, dass die Hydraulikleitung mit einem figürlich nicht dargestellten Hydraulikanschluss des Druckzylinders 12 verbunden ist.

Figur 3 zeigt den Druckerzeugungsvorrichtung 1 gemäß Figur 1 bei einer Zugbeanspruchung, wobei die Zugkraft 22 oder mit anderen Worten die Verzögerungskraft als Zugbeanspruchung in den ersten Anschluss 2 eingeleitet wird. In diesem Fall ist durch den Flanschabschnitt 17 ein Zuganschlag ausgebildet, der an den ortsfesten Greifarmen 16 der Hülseneinheit 14 anschlägt, so dass das Zylinderrohr 12 zugfest an der abzubremsenden Masse gehalten ist. Der Zuganschlag wird hier auch als Anschlagschulter bezeichnet. Aufgrund des Eingriffes zwischen dem Mitnehmer 7 und den Greifarmen 6 kommt es zu einer Bewegung der Kolbeneinheit 8 nach links in Richtung der Verzögerungskraft 19, wobei der Kolben 10 unter Verkleinerung des Volumens der Hydraulikkammer 11 in dem ortsfest gehaltenen Zylinderrohr 12 nach links bewegt wird.

In der Hydraulikkammer 11 selbst ist eine Druckfeder 18 angeordnet, die im kraftlosen Zustand, also bei Fehlen der Verzögerungskraft 19, dafür sorgt, dass das Volumen der Hydraulikkammer 11 sich wieder vergrößert, in dem sie die Kolbeneinheit 8 beziehungsweise das Zylinderrohr 12 wieder zurück in die in Figur 1 gezeigte Ausgangsstellung verschiebt. Um hier wieder die notwendige Hydraulikflüssigkeit aufnehmen zu können, ist die Hydraulikkammer 11 über nicht gezeigte hydraulische Verbindungsleitung mit einem figürlich nicht dargestellten Hydraulikkammtank oder einem Ausgleichsbehälter verbunden.

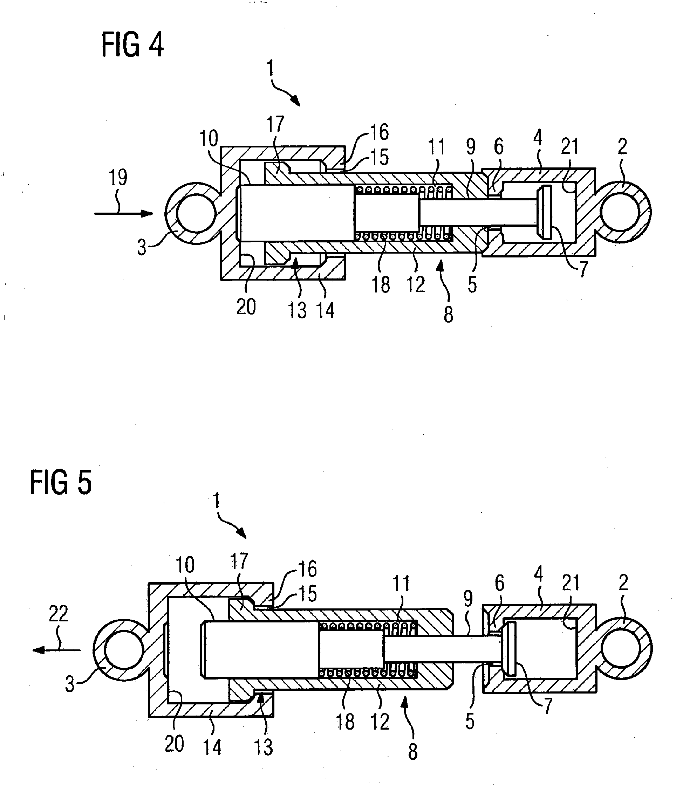

Figur 4 zeigt den Druckerzeugungsvorrichtung 1 gemäß Figur 1 bei einer Druckbeanspruchung 19, wobei die Druckerzeugungsvorrichtung 1 gegenüber der Darstellung in Figur 2 um 180 Grad gedreht wurde und die Druck- oder Verzögerungskraft 19 in der gezeigten Richtung in den zweiten Anschluss 3 eingeleitet wird, der bei der Druckerzeugungsvorrichtung 1 nach Figur 2 starr mit dem Gestell der abzubremsenden Masse verbunden war. In Figur 4 ist hingegen der erste Anschluss 2 starr an das besagten Gestell angekoppelt. Es ist erkennbar, dass die zweite Hülseneinheit 14 mit ihrer Innenwandung 20 an dem Kolben 10 anliegt und diesen in das Zylinderrohr 12 hinein verschoben hat, wobei sich das Volumen der Hydraulikkammer 11 verkleinert. Dabei werden die Kolbenstange 9 und der Mitnehmer 7 innerhalb der ersten hohlen Hülseneinheit 4 verschoben. Die hohle Hülseneinheit 4 ermöglicht somit einen Freilauf der starren Kolbeneinheit 8 bei einer Druckbeanspruchung 19. Der Freilauf entspricht dem Abstand des Mitnehmers 7 von der ihm gegenüberliegenden Innenwand 21 der Hülseneinheit 4.

Figur 5 zeigt die Druckerzeugungsvorrichtung 1 gemäß Figur 4 bei einer Zugbeanspruchung 22. Es ist erkennbar, dass die Greifarme 16 durch ihren Eingriff mit dem als Anschlagschulter wirkenden Flanschabschnitt 17 des Zylinderrohres 12 das Zylinderrohr 12 von der Hülseneinheit 4 wegbewegen. Aufgrund des Eingriffs des Mitnehmers 7 mit den Greifarmen 6 der ersten Hülseneinheit 4 ist die Kolbeneinheit 8 ortsfest an der Masse gehalten mit einer Verkleinerung des Volumens der Hydraulikkammer 11 und somit einer Beaufschlagung der Hydraulikflüssigkeit mit Druck im Gefolge.

## Patentansprüche

1. Druckerzeugungsvorrichtung (1) zum Erzeugen eines Hydraulikdruckes in Folge einer Zug- oder Druckbeanspruchung mit
- Anschlüssen (3), von denen einer mit einer Mechanik zum Einleiten einer mechanischen Zug- oder Druckbeanspruchung und ein anderer Anschluss (2, 3) starr mit einem Gestell verbindbar ist,
- einem Druckzylinder (12) und
- einer Kolbeneinheit (8), die sich zumindest teilweise und beweglich in dem Druckzylinder (12) erstreckt und gemeinsam mit dem Druckzylinder (12) eine mit Hydraulikflüssigkeit befüllte Hydraulikkammer (11) begrenzt,
bei der die Anschlüsse (2, 3) über Ankopplungsmittel (4, 7, 14, 17) mit dem Druckzylinder (12) oder der Kolbeneinheit (8) verbunden sind, wobei die Ankopplungsmittel (4, 7, 14, 17) so ausgestaltet sind, dass bei einer Zugbeanspruchung und bei einer Druckbeanspruchung dieselbe Hydraulikkammer (11) mit Druck beaufschlagt wird,
**dadurch gekennzeichnet, dass**
die Ankopplungsmittel hohle Hülseneinheiten (4, 14) aufweisen, wobei jede Hülseneinheit (4, 14) Greifarme (6, 16) ausbildet, die bei einer Zugbeanspruchung (22) in Eingriff mit an der Kolbeneinheit (8) oder an dem Druckzylinder (12) ausgebildeten Anschlagschultern (7, 17) geraten, so dass die Greifarme (6, 16) und die Anschlagschultern (7, 17) Zugkopplungsmittel ausbilden.

2. Druckerzeugungsvorrichtung (1) nach Anspruch 1,
**dadurch gekennzeichnet, dass**
bei einer Druckbeanspruchung (19) die Greifarme (6) einer der Hülseneinheiten (9) an dem Druckzylinder (12) anliegen, wobei die Kolbeneinheit (8) an einem Widerlager (20) anliegt, so dass die besagten Greifarme (6) und das Widerlager (20) Druckkopplungsmittel ausbilden.

3. Druckerzeugungsvorrichtung (1) nach Anspruch 2,
**dadurch gekennzeichnet, dass**
das Widerlager die Innenwand (20 einer anderen Hülseneinheit (14) ist.

4. Druckerzeugungsvorrichtung (1) nach einem der Ansprüche 1 bis 3,
**dadurch gekennzeichnet, dass**
der Druckzylinder als Zylinderrohr (12) ausgebildet ist, das zumindest teilweise in einer der hohlen Hülseneinheiten (14) angeordnet ist und einen Flanschabschnitt (17) als Anschlagschulter aufweist, der bei einer Zugbeanspruchung (22) in Eingriff mit den Greifarmen (16) der besagten Hülseneinheit (14) gelangt.

5. Druckerzeugungsvorrichtung (1) nach einem der Ansprüche 1 bis 4,
**dadurch gekennzeichnet, dass**
die Kolbeneinheit (8) einen in einem der Hülseneinheiten (4) angeordneten Mitnehmer (7) und eine in dem Druckzylinder (12) angeordneten und die Hydraulikkammer (11) begrenzenden Kolben (10) aufweist, wobei der Kolben (10) und der Mitnehmer (7) über eine Kolbenstange (9) miteinander verbunden sind und der Mitnehmer (7) die Greifarme (6) der Hülseneinheit (4) hintergreift, in welcher er angeordnet ist.

6. Druckerzeugungsvorrichtung (1) nach einem der vorhergehenden Ansprüche,
**dadurch gekennzeichnet, dass**
in der Hydraulikkammer (11) eine Druckfeder (18) angeordnet ist, die sich an dem Druckzylinder (12) und der Kolbeneinheit (8) abstützt.

7. Bremsvorrichtung zum Bremsen einer bewegten Masse mit einem beweglich geführten Kopplungsglied zum Andrücken eines Bremsbelages an eine Bremsfläche und einem mit einer Hydraulikflüssigkeit befüllten und mit dem Kopplungsglied verbundenen Bremsaktor zum Erzeugen einer Andruckkraft, die über das Kopplungsglied in den Bremsbelag einleitbar ist, wobei der Bremsbelag über eine Mechanik mit einer Druckerzeugungsvorrichtung (1) verbunden ist, die an einem Gestell der zu bremsenden Masse befestigbar ist, wobei die Druckerzeugungsvorrichtung beim Bremsen in einer mit dem Bremsaktor über Hydraulikleitungen verbundenen Hydraulikkammer einen hydraulischen Druck erzeugt,
**dadurch gekennzeichnet, dass**.
die Druckerzeugungsvorrichtung eine Druckerzeugungsvorrichtung (1) gemäß einem der Anspruche 1 bis 6 ist.

8. Bremsvorrichtung nach Anspruch 7,
**gekennzeichnet durch**
Regelungsmittel zum Regeln einer Verzögerungskraft (19, 22), die als Zug- oder Druckbeanspruchung über die Mechanik in die Anschlüsse der Druckerzeugungsvorrichtung (1) einleitbar ist.

## Claims

1. Pressure generating device (1) for generating a hydraulic pressure as a result of a tensile or compressive load, comprising:
- connecting means (3), one of which is connectable to a mechanism for transmitting a mechanical tensile or compressive load and another of which (2, 3) is connectable rigidly to a frame,
- a pressure cylinder (12) and
- a piston unit (8) which extends at least partially and movably in the pressure cylinder (12) and which jointly with the pressure cylinder (12) delimits a hydraulic chamber (11) filled with hydraulic fluid,
in which the connecting means (2, 3) are connected via coupling means (4, 7, 14, 17) to the pressure cylinder (12) or to the piston unit (8), the coupling means (4, 7, 14, 17) being configured in such a way that the same hydraulic chamber (11) is pressurized under a tensile load and under a compressive load **characterized in that**
the coupling means include hollow sleeve units (4, 14), each sleeve unit (4, 14) forming gripping arms (6, 16) which under a tensile load (22) come into engagement with stop shoulders (7, 17) formed on the piston unit (8) or on the pressure cylinder (12), so that the gripping arms (6, 16) and the stop shoulders (7, 17) form tensile coupling means.

2. Pressure generating device (1) according to Claim 1,
**characterized in that**
under a compressive load (19) the gripping arms (6) of one of the sleeve units (9) bear against the pressure cylinder (12), while the piston unit (8) bears against an abutment element (20), so that said gripping arms (6) and the abutment element (20) form compressive coupling means.

3. Pressure generating device (1) according to Claim 2,
**characterized in that**
the abutment element is the inner wall (20) of another sleeve unit (14).

4. Pressure generating device (1) according to any one of Claims 1 to 3,
**characterized in that**
the pressure cylinder is in the form of a cylindrical tube (12) which is arranged at least partially in one of the hollow sleeve units (14) and has a flange section (17) as the stop shoulder, which under a tensile load (22) comes into engagement with the gripping arms (16) of said sleeve unit (14).

5. Pressure generating device (1) according to any one of Claims 1 to 4,
**characterized in that**
the piston unit (8) has a driver (7) arranged in one of the sleeve units (4) and a piston (10) which is arranged in the pressure cylinder (12) and delimits the hydraulic chamber (11), the piston (10) and the driver (7) being connected to one another by means of a piston rod (9) and the driver (7) extending behind the gripping arms (6) of the sleeve unit (4) in which it is arranged.

6. Pressure generating device (1) according to any one of the preceding claims,
**characterized in that**
a compression spring (18) which bears against the pressure cylinder (12) and the piston unit (8) is arranged in the hydraulic chamber (11).

7. Brake device for braking a moving mass, comprising a movably guided coupling member for pressing a brake lining against a brake surface and a brake actuator filled with a hydraulic fluid and connected to the coupling member for generating an application force which can be applied to the brake lining via the coupling member, the brake lining being connected via a mechanism to a pressure generating device (1) which can be fastened to a frame of the mass to be braked and which generates during braking a hydraulic pressure in a hydraulic chamber connected to the brake actuator via hydraulic lines,
**characterized in that**
the pressure generating device is a pressure generating device (1) according to any one of Claims 1 to 6.

8. Brake device according to Claim 7,
**characterized by**
control means for regulating a deceleration force (19, 22) which can be transmitted as a tensile or a compressive load to the connecting means of the pressure generating device (1) via the mechanism.

## Revendications

1. Dispositif (1) de production d'une pression pour la production d'une pression hydraulique à la suite d'un effort de traction ou de compression, comprenant
- des raccords (3), dont l'un peut être relié à un mécanisme d'application d'un effort mécanique de traction ou de compression et dont un autre raccord (2, 3) peut être relié rigidement à un bâti,
- un cylindre (12) de pression et
- une unité (8) de piston qui s'étend au moins en partie et en étant mobile dans le cylindre (12) de pression et qui, conjointement avec le cylindre (12) de pression, délimite une chambre (11) hydraulique emplie de liquide hydraulique, dans lequel les raccords (2, 3) sont reliés au cylindre (12) de pression ou à l'unité (8) de piston par des moyens (4, 7, 14, 17) d'accouplement, les moyens (4, 7, 14, 17) d'accouplement étant tels que, lors d'un effort de traction et d'un effort de compression, la même chambre (11) hydraulique est soumise à une pression,
**caractérisé en ce que**
les moyens d'accouplement comprennent des unités (4, 14) creuses de manchon, chaque unité (4, 14) de manchon formant des bras (6, 16) de préhension qui, lors d'un effort (22) de traction, viennent en prise avec des épaulements (7, 17) de butée formés sur l'unité (8) de piston ou sur le cylindre (12) de pression, de sorte que les bras (6, 16) de préhension et les épaulements (7, 17) de butée forment des moyens d'accouplement en traction.

2. Dispositif (1) de production d'une pression suivant la revendication 1,
**caractérisé en ce que**,
lors d'un effort (19) de compression, les bras (6) de préhension de l'une des unités (9) de manchon s'appliquent au cylindre (12) de pression, l'unité (8) de piston s'appliquant à une butée (20), de sorte que lesdits bras (6) de préhension et la butée (20) forment des moyens d'accouplement en compression.

3. Dispositif (1) de production d'une pression suivant la revendication 2,
**caractérisé en ce que**
la butée est la paroi (20) intérieure d'une autre unité (14) de manchon.

4. Dispositif (1) de production d'une pression suivant l'une des revendications 1 à 3,
**caractérisé en ce que**
le cylindre de pression est constitué sous la forme d'un tube (12) cylindrique, qui est disposé au moins en partie dans l'une des unités (14) creuses de manchon et qui a une section (17) de bride comme épaulement de butée, qui, lors d'un effort (22) de traction, vient en prise avec des bras (16) de préhension de ladite unité (14) de manchon.

5. Dispositif (1) de production d'une pression suivant l'une des revendications 1 à 4,
**caractérisé en ce que**
l'unité (8) de piston a un entraîneur (7) disposé dans l'une des unités (4) de manchon et un piston (10) disposé dans le cylindre (12) de pression et délimitant la chambre (11) hydraulique, le piston (10) et l'entraîneur (7) étant reliés entre eux par une tige (9) de piston et l'entraîneur (7) s'accrochant derrière les bras (6) de préhension de l'unité (4) de manchon dans laquelle il est disposé.

6. Dispositif (1) de production d'une pression suivant l'une des revendications précédentes,
**caractérisé en ce que**
dans la chambre (11) hydraulique est disposé un ressort (18) de compression, qui s'appuie sur le cylindre (12) de pression et sur l'unité (8) de piston.

7. Dispositif de frein pour le freinage d'une masse en mouvement comprenant un élément d'accouplement guidé de manière mobile, pour appliquer une garniture de frein sur une surface de frein et un actionneur de frein, qui est empli de liquide hydraulique, qui est relié à l'élément d'accouplement et qui est destiné à produire une force d'application d'une pression qui peut être appliquée à la garniture de frein par l'élément d'accouplement, la garniture de frein étant reliée par un mécanisme à un dispositif (1) de production d'une pression qui peut être fixé à un bâti de la masse à freiner, le dispositif de production d'une pression produisant, au freinage, une pression hydraulique dans une chambre hydraulique communiquant avec l'actionneur de frein par des conduits hydrauliques,
**caractérisé en ce que**
le dispositif de production d'une pression est un dispositif (1) de production d'une pression suivant l'une des revendications 1 à 6.

8. Dispositif de frein suivant la revendication 7,
**caractérisé par**
des moyens de réglage pour régler une force (19, 22) de temporisation, qui peut être appliquée comme effort de traction ou de compression par le mécanisme dans les raccords du dispositif (1) de production d'une pression.
